# EUROPÄISCHE PATENTSCHRIFT

(11) **EP 3 327 346 B1**
(45) Veröffentlichungstag und Bekanntmachung des Hinweises auf die Patenterteilung: **10.07.2019**
(21) Anmeldenummer: 17203714.5
(22) Anmeldetag: 27.11.2017
(51) Int. Cl.: F21V 27/02, F21V 21/28, F21V 23/00, F21V 21/30, F21V 31/00, F21V 31/04, F21Y 115/10, F21V 21/34, H02G 15/00, H02G 15/013, H02G 3/20, F21Y 101/00

(54) **LEUCHTEN-ANORDNUNG MIT EINER TRAGSCHIENE UND EINER LEUCHTE**
LIGHTS ARRANGEMENT WITH A SUPPORTING RAIL AND A LIGHT
DISPOSITIF D'ÉCLAIRAGE DOTÉ D'UN RAIL SUPPORT ET D'UN ÉCLAIRAGE

(30) Priorität: 28.11.2016 DE 202016106607 U
(43) Veröffentlichungstag der Anmeldung: 30.05.2018
(73) Patentinhaber: Zumtobel Lighting GmbH, 6850 Dornbirn (AT)
(72) Erfinder: Wirthensohn, Klaus, 6867 Schwarzenberg (AT); Moosbrugger, Brian, 6912 Hörbranz (AT)
(74) Vertreter: Thun, Clemens

(56) Entgegenhaltungen:
- EP-A1- 1 617 137
- EP-A1- 2 031 298
- DE-C- 824 655
- DE-T2- 69 714 720

## Beschreibung

Die Erfindung betrifft eine Leuchten-Anordnung mit einer Tragschiene und einer Leuchte, die an der Tragschiene gehalten angeordnet ist.

Aus dem Stand der Technik ist eine Leuchten-Anordnung bekannt, die eine Tragschiene und einen LED-Strahler (LED: Licht emittierende Diode) aufweist, der an der Tragschiene gehalten angeordnet ist. Der LED-Strahler kann dabei gegenüber der Tragschiene geschwenkt werden, so dass hierdurch die Richtung der Lichtabgabe verändert werden kann.

Die Eignung der bekannten Leuchten-Anordnung mit Bezug auf die im Betrieb gegebenen Umgebungsbedingungen ist hierbei beschränkt. So sind die LED-Strahler beispielsweise nicht vor einem Eindringen von Feuchtigkeit geschützt. Insbesondere eignet sich die bekannte Leuchten-Anordnung daher nicht für einen Betrieb im Außenbereich.

Aus der EP 1 617 137 ist eine Beleuchtungsanordnung mit einem Versorgungsgehäuse und einem Leuchtenkörper mit einer Lichtquelle bekannt. Ein Versorgungskabel für die Lichtquelle führt von dem Versorgungsgehäuse durch eine in dem Leuchtenkörper gebildete Öffnung in Letzteren hinein.

Aus der DE 824 655 C ist ein selbsthemmender Kabeleinführungspfropfen bekannt.

Aus der EP 2 031 298 A1 ist eine Leuchten-Anordnung mit einer Tragschiene und einem schwenkbar an dieser angeordneten Leuchten-Kopfbereich bekannt.

Aus der DE 697 14 720 T2 ist eine Leuchte bekannt, bei der mit Hilfe eines Fixierelements eine durch eine Öffnung geführte Leuchte fixiert ist und die Öffnung abgedeckt wird.

Der Erfindung liegt die Aufgabe zugrunde, eine entsprechende Leuchten-Anordnung zu verbessern. Insbesondere soll sich die Leuchten-Anordnung bei vorteilhaften Herstellungsmöglichkeiten durch eine besondere Eignung zum Betrieb auch unter erschwerten Umgebungsbedingungen, beispielsweise im Außenbereich, auszeichnen.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchten-Anordnung vorgesehen, die eine Tragschiene aufweist, durch die ein Innenbereich gebildet ist, sowie eine Leuchte, die an der Tragschiene gehalten angeordnet ist. Die Leuchte weist eine Lichtquelle auf. Weiterhin umfasst die Leuchten-Anordnung eine elektrische Leitung zur Stromversorgung der Lichtquelle, wobei sich die elektrische Leitung in dem Innenbereich und über eine durch die Tragschiene und/oder die Leuchte gebildete Öffnung in die Leuchte hinein erstreckt. Außerdem weist die Leuchten-Anordnung ein Einsteckelement auf, das derart in die Öffnung eingesteckt ist, dass hierdurch die Öffnung abgedeckt und die Leitung fixiert ist. Erfindungsgemäß ist ferner eine Vergussmasse zur Fixierung der Leitung in dem Innenbereich der Tragschiene vorgesehen, wobei die Vergussmasse das Einsteckelement überdeckend angeordnet ist.

Durch das Einsteckelement lässt sich bewirken, dass die Öffnung derart abgedeckt ist, dass hierdurch ein Innenraum der Leuchte besonders gut vor einem Eindringen unerwünschter Fremdkörper geschützt ist. Ferner lässt sich mit Hilfe der Vergussmasse die Öffnung besonders geeignet dicht gestalten, beispielsweise staubdicht und/oder dicht gegenüber einem Eindringen von Feuchtigkeit.

Insbesondere lässt sich auf diese Weise die Schutzart IP65 (IP: International Protection) für die Leuchten-Anordnung erzielen. Die erste Kennziffer "6" steht hierbei für "Staubdicht", die zweite Kennziffer "5" für "Schutz gegen Strahlwasser (Düse) aus beliebigem Winkel". Somit lässt sich die Leuchten-Anordnung auf diese Weise insbesondere derart gestalten, dass sie sich für einen Betrieb im Außenbereich eignet.

Durch das Einsteckelement lässt sich dabei vorteilhaft bewirken, dass im Rahmen der Herstellung der Leuchten-Anordnung bei einem Füllen des Innenbereichs der Tragschiene mit der Vergussmasse keine Vergussmasse in störendem Ausmaß durch die Öffnung in den Innenbereich der Leuchte eindringt.

Vorzugsweise weist die Tragschiene eine Tragschienenöffnung auf und die Leuchte ein Halteelement, das durch die Tragschienenöffnung hindurch ragend angeordnet ist, wobei die Öffnung durch das Halteelement ausgebildet ist. Auf diese Weise lässt sich besonders geeignet mit der Vergussmasse auch eine Abdichtung zwischen dem Halteelement und der Tragschiene bewirken.

Vorzugsweise ist das Halteelement über eine Schraubverbindung an der Tragschiene gehalten angeordnet. Dies ist vorteilhaft mit Bezug auf eine zuverlässige und einfach herzustellende Befestigung der Leuchte an der Tragschiene.

Vorzugsweise ist das Einsteckelement Pilz-artig geformt ist, so dass es einen Fußabschnitt und einen sich an Letzteren anschließenden erweiterten Kopfbereich aufweist, wobei das Einsteckelement mit seinem Kopfbereich die Öffnung überdeckend angeordnet ist. So lässt sich mit dem Einsteckelement eine besonders geeignete Abdeckung der Öffnung bewirken.

Vorzugsweise ist das Einsteckelement mit seinem Fußabschnitt in die Öffnung eingesteckt angeordnet, insbesondere kraftschlüssig zur Fixierung der Leitung eingesteckt angeordnet. So lässt sich eine besonders geeignete Fixierung der Leitung an dieser Stelle erzielen.

Vorzugsweise weist die Leuchte einen Leuchten-Kopfbereich auf, der relativ zu der Tragschiene schwenkbar gestaltet ist. So lässt sich eine vorteilhafte Einstellbarkeit der Hauptrichtung der Lichtabgabe der Leuchte bewirken, insbesondere, wenn die Gestaltung derart ist, dass der Leuchten-Kopfbereich um zwei unterschiedliche Drehachsen schwenkbar relativ zu der Tragschiene angeordnet ist.

Vorzugsweise weist die Leuchte einen Innenraum auf, in dem die Leitung mit Bewegungsspiel angeordnet ist. Dies ist insbesondere vorteilhaft mit Bezug auf eine Bewegungsmöglichkeit des Leuchten-Kopfbereichs zum Einstellen einer gewünschten Lichtabgaberichtung.

Herstellungstechnisch und funktionell vorteilhaft besteht das Einsteckelement aus Kunststoff.

Die Leuchte lässt sich besonders kleinbauend und dabei energetisch vorteilhaft gestalten, wenn die Lichtquelle der Leuchte eine LED-Lichtquelle ist.

Weiterhin vorzugsweise weist die Leuchten-Anordnung außerdem ein Betriebsgerät, insbesondere in Form eines Konverters zur Stromversorgung der Leuchte auf. Dabei ist das Betriebsgerät vorzugsweise an der Tragschiene gehalten angeordnet.

Vorzugsweise weist die Leuchten-Anordnung außerdem wenigstens eine weitere Leuchte auf, die insbesondere analog oder baugleich zu der zuerst genannten Leuchte gestaltet ist, wobei die weitere Leuchte in analoger Weise zu der zuerst genannten Leuchte an der Tragschiene angeordnet ist. So lässt sich eine besonders gut einstellbare Lichtabgabe der Leuchten-Anordnung erzielen.

Die Erfindung wird im Folgenden anhand eines Ausführungsbeispiels und mit Bezug auf die Zeichnungen näher erläutert. Es zeigen:
- Fig. 1: eine perspektivische Schnitt-Skizze eines Ausführungsbeispiels einer anmeldungsgemäßen Leuchten-Anordnung,
- Fig. 2: eine, der Fig. 1 entsprechende Skizze, unter Weglassung des Einsteckelements und der Leitung,
- Fig. 3: eine Schnitt-Skizze der Leuchte der Leuchten-Anordnung in separierter Form,
- Fig. 4: eine Darstellung der Leuchte in separierter Form, vor dem Zusammenbau mit der Tragschiene und noch ohne Einsteckelement und
- Fig. 5: eine Darstellung eines Bereichs der Leuchte um das Halteelement mit eingestecktem Einsteckelement.

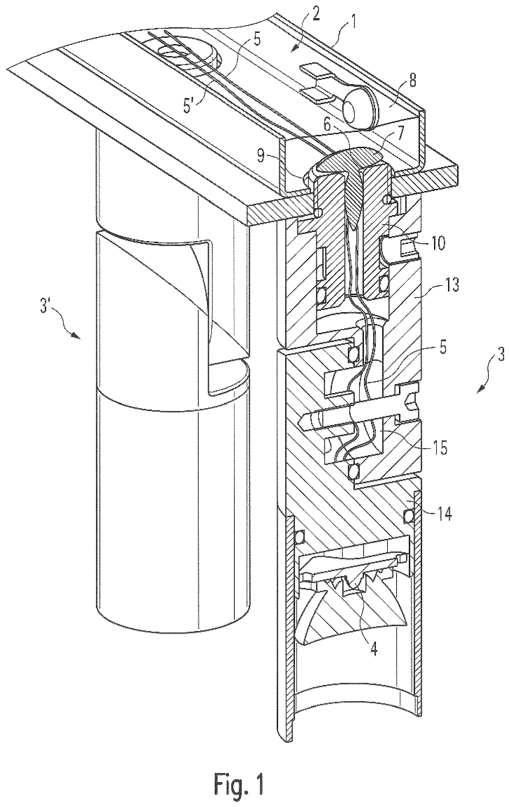

Fig. 1 zeigt ein Ausführungsbeispiel einer anmeldungsgemäßen Leuchten-Anordnung, hier im Weiteren auch kurz als Anordnung bezeichnet. Die Anordnung umfasst eine Tragschiene 1, durch die ein insbesondere Trog-artiger Innenbereich 2 gebildet ist. Die Tragschiene 1 kann dafür vorgesehen sein, zur Montage der Anordnung an einem tragenden Element, beispielsweise einer Fassadenwand befestigt zu werden. Die Tragschiene 1 bildet somit eine tragende Basis der Anordnung.

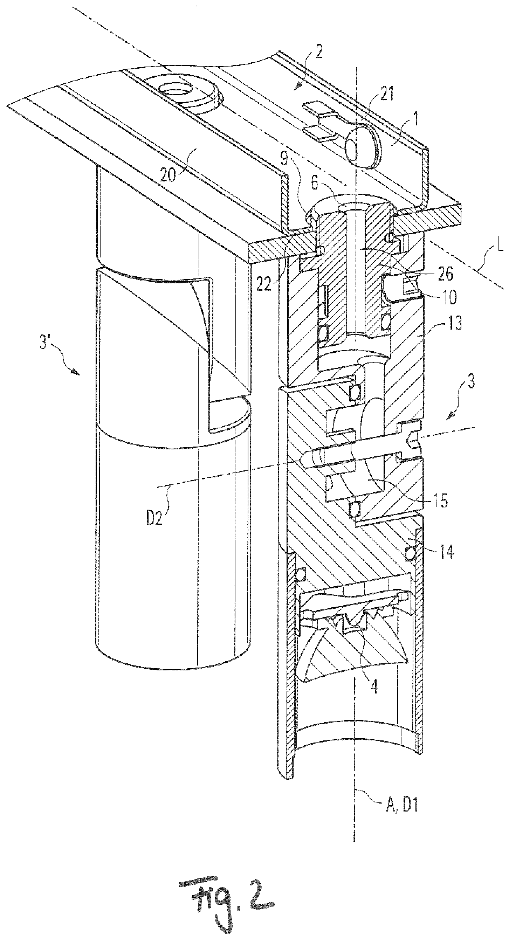

In Fig. 2 ist die Anordnung unter Weglassung einiger Teile entsprechend der Darstellung aus Fig. 1 skizziert. Die Tragschiene 1 ist länglich, so dass sie sich entlang einer Längsachse L erstreckt. Die Tragschiene 1 kann derart gestaltet sein, dass sie in einem Querschnitt normal zu der Längsachse L betrachtet eine U-Form aufweist oder einen Teilbereich mit einer U-Form, wobei der Innenbereich 2 durch die U-Form gebildet ist. Vorzugsweise ist die Tragschiene 1 als Profilteil gestaltet.

Im gezeigten Beispiel ist die Tragschiene 1 durch ein Profilteil mit einem U-förmigen Querschnitt gebildet, so dass ein erster U-Schenkel 20, ein zweiter U-Schenkel 21 und ein, die beiden U-Schenkel 20, 21 miteinander verbindender Verbindungsschenkel 22 gebildet sind. Dabei ist durch die drei genannten Schenkel 20, 21, 22 der Innenbereich 2 der Tragschiene 1 begrenzt.

Weiter umfasst die Anordnung eine - in Fig. 1 geschnitten dargestellte - Leuchte 3, die an der Tragschiene 1 gehalten angeordnet ist. Im gezeigten Beispiel ist die Leuchte 3 an dem Verbindungsschenkel 22 der Tragschiene 1 befestigt. Die Leuchte 3 weist eine Lichtquelle 4 auf. Bei der Lichtquelle 4 kann es sich insbesondere um eine LED-Lichtquelle handeln. Das von der Lichtquelle 4 erzeugte Licht wird von der Leuchte 3 nach außen abgegeben.

Weiter umfasst die Anordnung eine elektrische Leitung 5 zur Stromversorgung der Lichtquelle 4. Die Leitung 5 erstreckt sich in dem Innenbereich 2 der Tragschiene 1 und über eine Öffnung 6 in die Leuchte 3 hinein. Die Öffnung 6 stellt also eine Zuführungsöffnung für die Leitung 5 zu der Leuchte 3 dar.

Selbstverständlich kann die Anordnung noch zumindest eine weitere elektrische Leitung 5' zur Stromversorgung der Leuchte 3 aufweisen, die in analoger Weise zu der zuerst genannten Leitung 5 angeordnet ist. Aufgrund der analogen Gestaltung wird der Einfachheit halber hier im Folgenden lediglich auf die zuerst genannte Leitung 5 Bezug genommen.

Im Allgemeinen kann die Öffnung 6, durch die hindurch sich die Leitung 5 erstreckt, durch die Tragschiene 1 und/oder durch die Leuchte 3 gebildet sein. Im gezeigten Beispiel ist sie durch die Leuchte 3 gebildet.

Weiter umfasst die Anordnung ein Einsteckelement 7, das derart in die Öffnung 6 eingesteckt angeordnet ist, dass hierdurch die Öffnung 6 abgedeckt und die Leitung 5 fixiert ist. Das Einsteckelement 7 kann insbesondere durch einen Stopfen bzw. eine Art "Clip" gebildet sein. Durch das Einsteckelement 7 ist die Leitung 5 also im Bereich der Öffnung 6 fixiert. Dies ist vorteilhaft, weil so die Funktionalität der Leuchte 3 quasi unabhängig von demjenigen Anteil der Leitung 5, der in dem Innenraum 2 der Tragschiene 1 verläuft, gewährleistet werden kann.

Vorzugsweise umfasst die Anordnung weiterhin eine Vergussmasse 8 zur Fixierung der Leitung 5 in dem Innenbereich 2 der Tragschiene 1. Durch die Vergussmasse 8 lässt sich insbesondere ein besonders geeigneter Schutz der Leitung 5 vor Umwelteinflüssen bewirken. Hierzu kann die Vergussmasse 8 insbesondere derart angeordnet sein, dass ein in dem Innenraum 2 der Tragschiene 1 verlaufender Anteil der Leitung 5 in der Vergussmasse 8 eingebettet ist. Hierdurch ist die Leitung 5 besonders gut geschützt.

Die Vergussmasse 8 ist insbesondere derart angeordnet, dass sie das Einsteckelement 7 überdeckt, vorzugsweise vollständig überdeckt. So lässt sich durch die Vergussmasse 8 ein besonders geeigneter Schutz der Leitung 5 im Bereich der Öffnung 6 bewirken.

Dabei lässt sich durch das Einsteckelement 7 erzielen, dass die Öffnung 6 derart abgedeckt ist, dass im Rahmen der Herstellung der Anordnung beim Einfüllen der Vergussmasse 8 in den Innenbereich 2 der Tragschiene 1 nicht Anteile der Vergussmasse 8 in unerwünschter Weise in die Leuchte 3 eindringen.

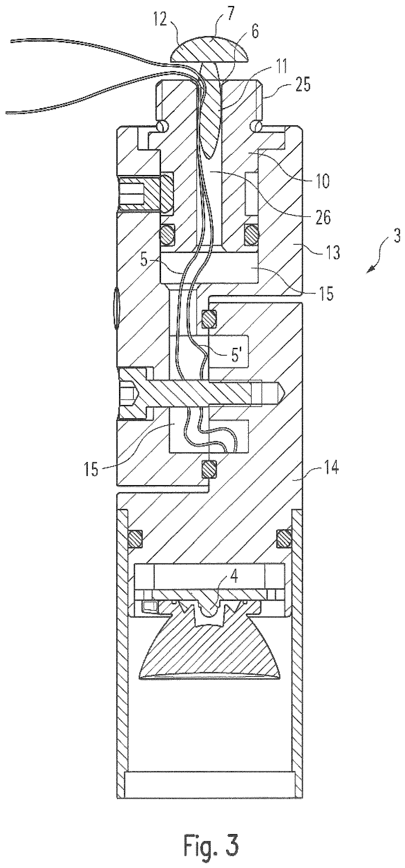

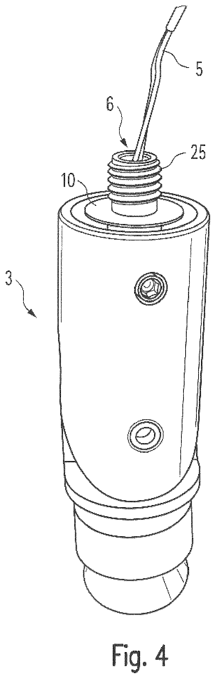

In Fig. 3 ist die Leuchte 3 in einem Schnitt in separierter Form skizziert, Fig. 4 zeigt eine perspektivische Darstellung der separierten Leuchte, hier in einem Zustand, in dem das Einsteckelement 7 noch nicht in die Öffnung 6 eingesteckt ist.

Vorzugsweise ist das Einsteckelement 7 Pilz-artig geformt, so dass es einen Fußabschnitt 11 und einen sich an Letzteren anschließenden erweiterten Kopfbereich 12 aufweist, wobei das Einsteckelement 7 mit seinem Kopfbereich 12 die Öffnung 6 überdeckend angeordnet ist. So lässt sich ein unerwünschtes Eindringen von Anteilen der Vergussmasse 8 während der Herstellung der Anordnung besonders geeignet verhindern. Der Fußabschnitt 11 ist vorzugsweise in die Öffnung 6 eingesteckt.

Beispielsweise kann das Einsteckelement 7 als Kunststoffteil gestaltet sein bzw. aus Kunststoff bestehen.

Wie im gezeigten Beispiel der Fall, kann die Tragschiene 1 eine Tragschienenöffnung 9 aufweisen und die Leuchte 3 ein Halteelement 10, das durch die Tragschienenöffnung 9 hindurch ragend angeordnet ist. Die Tragschienenöffnung 9 kann insbesondere in dem Verbindungsschenkel 22 der Tragschiene 1 ausgebildet sein. Vorzugsweise ist die Tragschienenöffnung 9 kreisförmig.

Die Öffnung 6 kann hierbei insbesondere durch das Halteelement 10 der Leuchte 3 ausgebildet sein. Bei dem Halteelement 10 kann es sich um ein eigenes Bauteil der Leuchte 3 handeln.

Die Gestaltung kann derart sein, dass das Halteelement 10 über eine Schraubverbindung an der Tragschiene 1 gehalten angeordnet ist. Insbesondere kann das Halteelement 10 hierzu ein Gewinde 25 aufweisen, das für die Schraubverbindung mit der Tragschiene 1 gestaltet ist. Ein hierzu korrespondierendes Gewinde kann beispielsweise in der Tragschienenöffnung 9 gebildet sein, so dass die Schraubverbindung durch das Gewinde 25 des Halteelements 10 und das hierzu korrespondierende Gewinde der Tragschienenöffnung 9 gebildet ist. Die Schraubverbindung kann dabei die einzige haltende Verbindung zwischen der Leuchte 3 und der Tragschiene 1 bilden.

Das Halteelement 10 der Leuchte 3 kann einen länglichen Kanal 26 aufweisen, der über die Öffnung 6 in den Innenbereich 2 der Tragschiene 1 mündet. Dabei verläuft die Leitung 5 durch diesen Kanal 26 hindurch. Der Kanal 26 erstreckt sich dabei entlang einer Leuchten-Achse A, die mit der Längsachse L der Tragschiene 1 einen Winkel einschließt. Vorzugsweise beträgt dieser Winkel zwischen der Längsachse L der Tragschiene 1 und der Leuchten-Achse A zwischen 80° und 100°, insbesondere 90°.

Daher ist in der Leitung 5 im Bereich der Öffnung 6 eine Biegung gebildet. Je kleiner die parallel zu der Leuchten-Achse A betrachtete Erstreckung des Innenbereichs 2 der Tragschiene 1 ist, desto ausgeprägter muss die genannte Biegung der Leitung 5 sein. Daher ist eine besonders starke entsprechende Biegung der Leitung 5 erforderlich, um die Tragschiene 1 mit entsprechend geringer Bauhöhe gestalten zu können.

Dies bringt allerdings mit sich, dass beim Zusammenbau der Anordnung ein Anteil der Leitung 5, der in dem Innenbereich 2 der Tragschiene 1 verläuft, vor dem Einfüllen der Vergussmasse 8 in den Innenbereich 2, beispielsweise nahe an dem bzw. am Verbindungsschenkel 22 fixiert werden muss, um sie während des Einfüll-Vorgangs vollständig mit der Vergussmasse 8 abdecken zu können. Grundsätzlich ist es möglich, hierfür beispielsweise einen, an der Tragschiene 1 anzuordnenden Drahthalter zu verwenden. Allerdings ist dies mit einem entsprechend hohen Herstellungs- und Montageaufwand verbunden.

Durch Verwendung des Einsteckelements 7 lässt sich dies vorteilhafter durchführen, da die gewünschte Biegung der Leitung 5 durch ein einfaches Einstecken des Einsteckelements 7 in die Öffnung 9 hergestellt werden kann. Vorzugsweise ist das Einsteckelement 7 mit seinem Fußabschnitt 11 hierzu in die Öffnung 6 eingesteckt angeordnet, insbesondere kraftschlüssig zur Fixierung der Leitung 5 eingesteckt angeordnet. So lässt sich besonders geeignet erzielen, dass die Leitung 5 durch das Einsteckelement 7 in der Öffnung 6 festgeklemmt und so an dieser Stelle in seiner Lage fixiert gehalten ist. Das Einsteckelement 7 bildet mit anderen Worten einen Keil für eine Fixierung der Leitung 5 in der Öffnung 6.

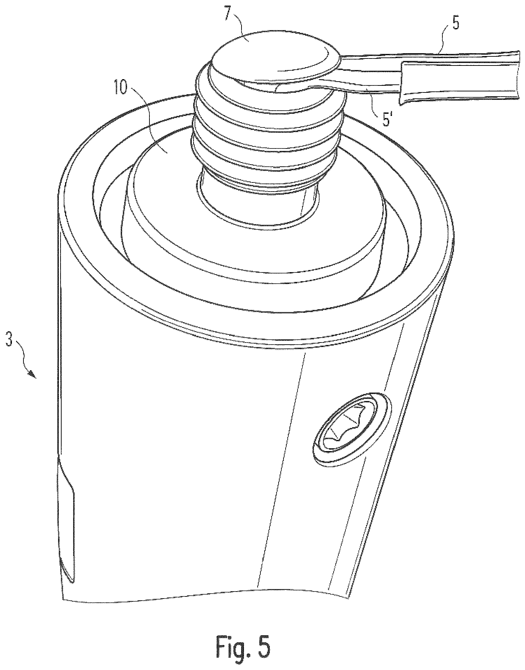

Wie oben erwähnt, ist in Fig. 4 die separierte Leuchte in einem Zustand gezeigt, in dem das Einsteckelement 7 noch nicht in die Öffnung 6 eingesteckt ist. Man erkannt, dass sich die Leitung 5 in diesem Zustand außerhalb der Öffnung 6 gleichsam ohne deutliche Biegung weitererstreckt. Wie im Ergebnis in Fig. 5 gezeigt, lässt sich die gewünschte starke Biegung der Leitung 5 durch ein einfaches Einstecken des Einsteckelements 7 in die Öffnung 6 herstellen.

Wie im gezeigten Beispiel der Fall, weist die Leuchte 3 weiterhin vorzugsweise einen Leuchten-Kopfbereich 14 auf, der relativ zu der Tragschiene 1 schwenkbar gestaltet ist. Dabei kann die Lichtquelle 4 insbesondere in dem Leuchten-Kopfbereich 14 angeordnet sein. Durch diese Gestaltung ist insbesondere eine Möglichkeit für eine Einstellbarkeit einer gewünschten Hauptlichtabgaberichtung der Leuchte gegeben.

Beispielsweise kann die Gestaltung hierbei derart sein, dass der Leuchten-Kopfbereich 14 um zwei unterschiedliche Drehachsen schwenkbar relativ zur Tragschiene 1 angeordnet ist. Im gezeigten Beispiel ist der Leuchten-Kopfbereich 14 um eine erste Drehachse D1 schwenkbar gestaltet, die parallel zur Leuchten-Achse A orientiert ist. Außerdem ist der Leuchten-Kopfbereich 14 um eine zweite Drehachse D2 schwenkbar gestaltet, die rechtwinklig zu der ersten Drehachse D1 orientiert ist.

Im gezeigten Beispiel weist die Leuchte weiterhin einen Leuchten-Grundkörper 13 auf, der zur Realisierung der ersten Drehachse D1 drehbar gegenüber dem Halteelement 10 angeordnet ist. Zur Realisierung der zweiten Drehachse D2 ist der Leuchten-Kopfbereich 14 drehbar gegenüber dem Leuchten-Grundkörper 13 gelagert.

Um eine geeignete Schwenkbarkeit des Leuchten-Kopfbereichs 14 zu ermöglichen, muss die Leitung 5 in der Leuchte 3 ein gewisses Spiel aufweisen, denn je nach Schwenkbewegung wird die Leitung 5 dort etwas gestreckt bzw. zusammengeschoben. Daher ist die Gestaltung vorzugsweise derart, dass die Leuchte einen vorzugsweise hohlen Innenraum 15 aufweist, in dem die Leitung 5 mit Bewegungsspiel angeordnet ist. Insbesondere kann die Gestaltung derart sein, dass der Kanal 26 des Halteelements 10 auf der, der Öffnung 6 gegenüberliegenden Seite in den Innenraum 15 mündet oder in den Innenraum 15 übergeht.

Auch mit Bezug auf die Herstellung dieses Bewegungsspiels ist das Einsteckelement 7 von Vorteil. Durch das Einstecken des Einsteckelements 7 lässt sich erzielen, dass die Leitung 5 etwas in den Innenraum 15 hineingedrückt wird, so dass sie nicht straff in dem Innenraum 15 verläuft, sondern das gewünschte Bewegungsspiel aufweist, durch das das oben erwähnte Schwenken bzw. Verdrehen des Leuchten-Kopfbereichs 14 in gewünschtem Ausmaß ermöglicht ist. Die Leitung 5 hat hier sozusagen eine "Längenreserve". Das Einsteckelement 7 verbleibt anschließend dauerhaft wie vorgesehen in die Öffnung 6 positioniert, sodass die Leitung 5 entsprechend in dieser das Bewegungsspiel aufweisenden Position fixiert ist.

Weiterhin vorzugsweise weist die Anordnung außerdem ein Betriebsgerät, insbesondere in Form eines Konverters zur Stromversorgung der Leuchte 3 auf. Beispielsweise kann das Betriebsgerät an der Tragschiene 1 gehalten angeordnet sein. Dabei erstreckt sich die Vergussmasse 8 vorzugsweise bis zu dem Betriebsgerät bzw. bis über einen elektrischen Anschlussbereich des Betriebsgeräts, an dem die Leitung 5 mit dem Betriebsgerät elektrisch verbunden ist, so dass auch hier ein entsprechend guter Schutz für die Leitung 5 gebildet ist.

Wie in Fig. 1 angedeutet, kann die Anordnung außerdem wenigstens eine weitere Leuchte 3' aufweisen, die vorzugsweise analog oder baugleich zu der zuerst genannten Leuchte 3 gestaltet ist, wobei die weitere Leuchte 3' in analoger Weise wie die zuerst genannte Leuchte 3 an der Tragschiene 1 angeordnet ist. Die Tragschiene 1 kann also zur Halterung mehrerer gleichartiger Leuchten dienen.

Eine Leitung zur Stromversorgung der wenigstens einen weiteren Leuchte 3' ist vorzugsweise in analoger Weise angeordnet wie die zuerst genannte Leitung 5. Dabei kann auch vorgesehen sein, dass die Leitung 5 auch zur Stromversorgung der wenigstens einen weiteren Leuchte 3' dient und außerdem mit dem Betriebsgerät verbunden ist.

Mit der anmeldungsgemäßen Leuchten-Anordnung lässt sich insbesondere Folgendes erzielen:
- Die Anordnung eignet sich für einen Betrieb im Außenbereich.
- Die Anordnung lässt sich so gestalten, dass sie die Schutzart IP65 erfüllt.
- Mit dem Einsteckelement (7) lässt sich erzielen, dass im Rahmen der Herstellung der Anordnung beim Einfüllen der Vergussmasse (8) keine Vergussmasse in das Innere der Leuchte (3) eindringt.
- Mit dem Einsteckelement (7) lässt sich erzielen, dass im Rahmen der Herstellung der Anordnung die gewünschte starke Biegung der Leitung (5) im Bereich der Öffnung (6) besonders einfach hergestellt werden kann.
- Mit dem Einsteckelement (7) lässt erzielen, dass im Rahmen der Herstellung der Anordnung die Leitung (5) derart angeordnet wird, dass sie im Innenraum (15) der Leuchte ein Bewegungsspiel aufweist, das ein ungehindertes Schwenken des Leuchten-Kopfbereichs (14) zum Einstellen der Richtung der Lichtabgabe ermöglicht.

## Patentansprüche

1. Leuchten-Anordnung, aufweisend
- eine Tragschiene (1), durch die ein Innenbereich (2) gebildet ist,
- eine Leuchte (3), die an der Tragschiene (1) gehalten angeordnet ist, wobei die Leuchte (3) eine Lichtquelle (4) aufweist,
- eine elektrische Leitung (5) zur Stromversorgung der Lichtquelle (4), wobei sich die elektrische Leitung (5) in dem Innenbereich (2) und über eine durch die Tragschiene (1) und/oder die Leuchte (3) gebildete Öffnung (6) in die Leuchte (3) hinein erstreckt,
**gekennzeichnet durch**
- ein Einsteckelement (7), das derart in die Öffnung (6) eingesteckt ist, dass hierdurch die Öffnung (6) abgedeckt und die Leitung (5) fixiert ist,
- eine Vergussmasse (8) zur Fixierung der Leitung (5) in dem Innenbereich (2) der Tragschiene (1), wobei die Vergussmasse (8) das Einsteckelement (7) überdeckend angeordnet ist.

2. Leuchten-Anordnung nach Anspruch 1,
**dadurch gekennzeichnet,**
**dass** die Tragschiene (1) eine Tragschienenöffnung (9) aufweist und die Leuchte (3) ein Halteelement (10) aufweist, das durch die Tragschienenöffnung (9) hindurch ragend angeordnet ist, wobei die Öffnung (6) durch das Halteelement (10) ausgebildet ist.

3. Leuchten-Anordnung nach Anspruch 2,
**dadurch gekennzeichnet,**
**dass** das Halteelement (10) über eine Schraubverbindung an der Tragschiene (1) gehalten angeordnet ist.

4. Leuchten-Anordnung nach einem der vorhergehenden Ansprüche,
**dadurch gekennzeichnet,**
**dass** das Einsteckelement (7) Pilz-artig geformt ist, so dass es einen Fußabschnitt (11) und einen sich an Letzteren anschließenden erweiterten Kopfbereich (12) aufweist, wobei das Einsteckelement (7) mit seinem Kopfbereich (12) die Öffnung (6) überdeckend angeordnet ist.

5. Leuchten-Anordnung nach Anspruch 4,
**dadurch gekennzeichnet,**
**dass** das Einsteckelement (7) mit seinem Fußabschnitt (11) in die Öffnung (6) eingesteckt angeordnet ist, insbesondere kraftschlüssig zur Fixierung der Leitung (5) eingesteckt angeordnet ist.

6. Leuchten-Anordnung nach einem der vorhergehenden Ansprüche,
**dadurch gekennzeichnet,**
**dass** die Leuchte (3) einen Leuchten-Kopfbereich (14) aufweist, der relativ zu der Tragschiene (1) schwenkbar gestaltet ist.

7. Leuchten-Anordnung nach Anspruch 6,
**dadurch gekennzeichnet,**
**dass** die Gestaltung derart ist, dass der Leuchten-Kopfbereich (14) um zwei unterschiedliche Drehachsen schwenkbar relativ zu der Tragschiene (1) angeordnet ist.

8. Leuchten-Anordnung nach einem der vorhergehenden Ansprüche,
**dadurch gekennzeichnet,**
**dass** die Leuchte einen Innenraum (15) aufweist, in dem die Leitung (5) mit Bewegungsspiel angeordnet ist.

9. Leuchten-Anordnung nach einem der vorhergehenden Ansprüche,
**dadurch gekennzeichnet,**
**dass** das Einsteckelement (7) aus Kunststoff besteht.

10. Leuchten-Anordnung nach einem der vorhergehenden Ansprüche,
**dadurch gekennzeichnet,**
**dass** die Lichtquelle (4) der Leuchte eine LED-Lichtquelle ist.

11. Leuchten-Anordnung nach einem der vorhergehenden Ansprüche,
**gekennzeichnet durch**
- ein Betriebsgerät, insbesondere in Form eines Konverters zur Stromversorgung der Leuchte (3), wobei das Betriebsgerät vorzugsweise an der Tragschiene (1) gehalten angeordnet ist.

12. Leuchten-Anordnung nach einem der vorhergehenden Ansprüche,
**gekennzeichnet durch**
- wenigstens eine weitere Leuchte (3'), die vorzugsweise analog oder baugleich zu der zuerst genannten Leuchte (3) gestaltet ist, wobei die weitere Leuchte (3') in analoger Weise zu der zuerst genannten Leuchte (3) an der Tragschiene (1) angeordnet ist.

## Claims

1. Lamp arrangement comprising
- a support rail (1) forming an inner region (2),
- a lamp (3) arranged so as to be held on the support rail (1), wherein the lamp (3) comprises a light source (4),
- an electrical line (5) for supplying power to the light source (4), wherein the electrical line (5) extends in the inner region (2) and, via an opening (6) formed by the support rail (1) and/or the lamp (3), into the lamp (3),
**characterized by**
- an insertion element (7) which is inserted into the opening (6) such that the opening (6) is thereby covered and the line (5) is thereby fixed,
- a casting compound (8) for fixing the line (5) in the inner region (2) of the support rail (1), wherein the casting compound (8) is arranged so as to overlap the insertion element (7) .

2. Lamp arrangement according to claim 1,
**characterized in that**
the support rail (1) comprises a support rail opening (9) and the lamp (3) comprises a holding element (10), which is arranged so as to protrude through the support rail opening (9), wherein the opening (6) is formed by the holding element (10) .

3. Lamp arrangement according to claim 2,
**characterized in that**
the holding element (10) is arranged so as to be held by a screw connection on the support rail (1).

4. Lamp arrangement according to one of the preceding claims,
**characterized in that**
the insertion element (7) is shaped like a mushroom so that it has a foot section (11) and an expanded head region (12) adjacent thereto, wherein the head region (12) of the insertion element (7) is arranged so as to overlap the opening (6).

5. Lamp arrangement according to claim 4,
**characterized in that**
the foot section (11) of the insertion element (7) is arranged so as to be inserted into the opening (6), in particular arranged so as to be inserted in a force fit in order to fix the line (5).

6. Lamp arrangement according to one of the preceding claims,
**characterized in that**
the lamp (3) comprises a lamp head region (14), which is designed to be pivotable relatively to the support rail (1).

7. Lamp arrangement according to claim 6,
**characterized in that**
the design is such that the lamp head region (14) is arranged so as to be pivotable relatively to the support rail (1) about two different axes of rotation.

8. Lamp arrangement according to one of the preceding claims,
**characterized in that**
the lamp has an interior space (15) in which the line (5) is arranged with play.

9. Lamp arrangement according to one of the preceding claims,
**characterized in that**
the insertion element (7) consists of plastic.

10. Lamp arrangement according to one of the preceding claims,
**characterized in that**
the light source (4) of the lamp is an LED light source.

11. Lamp arrangement according to one of the preceding claims,
**characterized by**
- an operating device, in particular in the form of a converter for the power supply of the lamp (3), wherein the operating device is preferably arranged so as to be held on the support rail (1).

12. Lamp arrangement according to one of the preceding claims,
**characterized by**
- at least one further lamp (3'), which is preferably designed to be analog or identical in design to the lamp (3) mentioned first, wherein the further lamp (3') is arranged on the support rail (1) analogously to the lamp (3) mentioned first.

## Revendications

1. Dispositif d'éclairage présentant :
- un rail support (1) formant une zone interne (2),
- une lampe (3) disposée retenue sur le rail support (1), ladite lampe (3) présentant une source lumineuse (4),
- une ligne électrique (5) pour l'alimentation en courant de la source lumineuse (4), ladite ligne électrique (5) s'étendant dans la zone interne (2) et, par le biais d'une ouverture (6) formée dans le rail support (1) et/ou dans la lampe (3), à l'intérieur de la lampe (3),
**caractérisé par**
- un élément enfichable (7) qui est enfiché dans l'ouverture (6) de manière à recouvrir l'ouverture (6) et à fixer la ligne (5),
- une pâte de scellement (8) destinée à fixer la ligne (5) dans la zone interne (2) du rail support (1), ladite pâte de scellement (8) étant disposée pour recouvrir l'élément enfichable (7) .

2. Dispositif d'éclairage selon la revendication 1,
**caractérisé en ce que**
le rail support (1) présente une ouverture de rail support (9) et la lampe (3) présente un élément de retenue (10) qui est disposé en saillie à travers l'ouverture de rail support (9), ladite ouverture (6) étant formée dans l'élément de retenue (10).

3. Dispositif d'éclairage selon la revendication 2,
**caractérisé en ce que**
l'élément de retenue (10) est disposé retenu sur le rail support (1) par le biais d'un raccord vissé.

4. Dispositif d'éclairage selon une des revendications précédentes,
**caractérisé en ce que**
l'élément enfichable (7) est en forme de champignon et présente une partie de pied (11) et une zone de tête (12) élargie raccordée à cette dernière, ledit élément enfichable (7) étant disposé de manière à recouvrir l'ouverture (6) par sa zone de tête (12).

5. Dispositif d'éclairage selon la revendication 4,
**caractérisé en ce que**
l'élément enfichable (7) est disposé inséré par sa partie de pied (11) dans l'ouverture (6), notamment inséré par force afin de fixer la ligne (5).

6. Dispositif d'éclairage selon une des revendications précédentes,
**caractérisé en ce que**
la lampe (3) présente une zone de tête (14) conçue pour pivoter par rapport au rail support (1).

7. Dispositif d'éclairage selon la revendication 6,
**caractérisé en ce que**
la conception de la zone de tête (14) de la lampe est telle que celle-ci est disposée pivotante autour de deux axes de rotation différents par rapport au rail support (1).

8. Dispositif d'éclairage selon une des revendications précédentes,
**caractérisé en ce que**
la lampe présente un espace interne (15) dans lequel la ligne (5) est disposée avec un jeu de mouvement.

9. Dispositif d'éclairage selon une des revendications précédentes,
**caractérisé en ce que**
l'élément enfichable (7) se compose de matière plastique.

10. Dispositif d'éclairage selon une des revendications précédentes,
**caractérisé en ce que**
la source lumineuse (4) de la lampe est une source lumineuse à LED.

11. Dispositif d'éclairage selon une des revendications précédentes,
**caractérisé par**
- un appareil de commande, en particulier sous la forme d'un convertisseur, pour l'alimentation en courant de la lampe (3), ledit appareil de commande étant disposé en étant de préférence retenu sur le rail support (1).

12. Dispositif d'éclairage selon une des revendications précédentes,
**caractérisé par**
- au moins une autre lampe (3') conçue de préférence de manière analogue ou de construction identique à la lampe (3) précitée, ladite autre lampe (3') étant disposée sur le rail support (1) de manière analogue à la lampe (3) précitée.
